# EUROPÄISCHE PATENTSCHRIFT

(11) **EP 0 892 251 B1**
(45) Veröffentlichungstag und Bekanntmachung des Hinweises auf die Patenterteilung: **13.06.2001**
(21) Anmeldenummer: 97112311.2
(22) Anmeldetag: 17.07.1997
(51) Int. Cl.: G01F 1/00, G01F 1/58

(54) **Magnetisch-induktive Strömungssonde**
Electromagnetic flow probe
Sonde d'écoulement électromagnétique

(43) Veröffentlichungstag der Anmeldung: 20.01.1999
(73) Patentinhaber: Endress + Hauser Flowtec AG, CH-4153 Reinach BL 1 (CH)
(72) Erfinder: Ohle, Frank, Dr. rer.nat., 79585 Steinen (DE); Griessmann, Marcel, 68700 Cernay (FR)
(74) Vertreter: Morstadt, Volker, Dipl.-Ing.

(56) Entgegenhaltungen:
- WO-A-96/18086
- US-A- 3 529 591
- US-A- 3 693 439
- US-A- 4 000 648
- ROLFF J ET AL: "SENSOREN-MID SENSOR MAGMETER" AUTOMATISIERUNGSTECHNISCHE PRAXIS - ATP, Bd. 35, Nr. 7, 1.Juli 1993, Seiten 421-423, XP000382756

## Beschreibung

Die Erfindung beschäftigt sich mit der Schaffung einer in ein in einer Rohrleitung strömendes und zu messendes Fluid praktisch senkrecht zu dessen Strömungsrichtung einzutauchenden und durch eine Bohrung in einer Wand der Rohrleitung hindurch fluiddicht einzusteckenden magnetischinduktive Strömungssonde.

Mit derartigen, in der genannten Bohrung z.B. mittels eines darin befindlichen Adapters einsteckbaren, Strömungssonden kann die Strömungsgeschwindigkeit des Fluids, aber auch bei entsprechender Kalibrierung der Volumendurchfluß des Fluids gemessen werden.

Im Gegensatz zu magnetisch-induktiven Durchflußaufnehmern, bei denen eine Spulenanordnung zur Erzeugung eines ein Meßrohr durchdringenden Magnetfelds auf der Mantelfläche dieses Meßrohrs fixiert ist und mindestens zwei Elektroden sich in dessen Wand befinden, werden die magnetisch-induktiven Strömungssonden nach der Erfindung mit ihrem kreiszylindrischen Gehäuse z.B. in eine seitliche Bohrung des Meßrohrs eingesteckt und in der Bohrung fluid-dicht fixiert.

Die erwähnte Spulenanordnung auf der Mantelfläche des Meßrohrs entfällt, da das Magnetfeld lediglich im Bereich des in das Fluid ragenden Frontendes der Strömungssonde existiert bzw. von einem deren Spulenanordnung durchfließenden Strom in diesem Bereich erzeugt wird.

In der US-A 38 81 350 ist eine magnetisch-induktive Strömungssonde beschrieben, die in Tiefsee-Meerwasser, in dem also hohe Drücke herrschen, und das relativ zur Strömungssonde fließt, einzutauchen ist, und die umfaßt:
- ein kreiszylindrisches, einen Außen-Durchmesser aufweisendes Gehäuse mit einem Frontende,
   -- das mit einer ebenen Frontplatte aus Isolier-Material fluiddicht verschlossen ist und
   -- das von einem linsen-förmigen Wulst umgeben ist,
- eine im Gehäuse angeordnete Spulenanordnung zur Erzeugung eines durch die Frontplatte hindurch in das Fluid hineinreichenden Magnetfelds,
- einen mindestens teilweise aus einem weichmagnetischen Material bestehenden, im Gehäuse angeordneten Spulenkern,
   -- der an oder in der Nähe der Frontplatte endet, und
- eine erste galvanische und eine zweite galvanische Elektrode, die in der Frontplatte auf einem von deren Durchmesser symmetrisch zu dessen Mittelpunkt angeordnet sind.

Es ist offensichtlich, daß die beschriebene Strömungssonde wegen des Wulstes nicht ohne weiteres in die Bohrung einer Wand einer Rohrleitung von außen fluiddicht eingesetzt werden kann. Diese Einsetzbarkeit von außen ist aber bei Meßrohren, insb. jedoch bei bereits installierten Rohrleitungen, zwingend. Der Wulst der vorbeschriebenen Strömungssonde muß also bei deren Verwendung zusammen mit einem Meßrohr und/oder einer Rohrleitung weggelassen werden.

Dann schließt aber das Frontende der magnetisch-induktiven Strömungssonde mit der vorbeschriebenen ebenen Frontplatte ab, in der sich im übrigen die Elektroden befinden müssen. Da das Fluid gegen das Frontende anströmt, entstehen stromabwärts von ihm Strömungswirbel ähnlich denen, wie sie bei Vortex-Durchflußaufnehmern auftreten.

Ausgangspunkt der Erfindung waren Untersuchungen der Erfinder zu der Frage, warum die Meßgenauigkeit von magnetisch-induktiven Strömungssonden mit einer ebenen Platte am Frontende bei niedriger Strömungsgeschwindigkeit und/oder bei kleinen Durchflüssen höchst unbefriegend ist.

Bei diesen Untersuchungen zeigte sich, daß die erwähnten Wirbel die Strömungsverhältnisse im Bereich der Elektroden in Abhängigkeit von der Strömungsgeschwindigkeit mehr oder weniger stark stören; jedenfalls ist die Meßgenauigkeit bei veränderlicher Strömungsgeschwindigkeit nicht konstant, sondern nichtlinear.

Die Erfindung dient daher sowohl der Verbesserung der absoluten Meßgenauigkeit als auch der Verbesserung der Linearität der Kennfunktion sowie der Verbesserung der Kurzzeit-Wiederholbarkeit von Messungen, jeweils bei sich ändernder Strömungsgeschwindigkeit, insb. bei kleinen Durchflüssen. Unter Kennfunktion wird hier die Abhängigkeit der Meßgenauigkeit vom Durchfluß bzw. deren Abhängigkeit von der Strömungsgeschwindigkeit verstanden.

Zur Behebung der aufgezeigten Problematik besteht die Erfindung in einer magnetisch-induktiven Strömungssonde,
- die in ein in einer Rohrleitung strömendes und zu messendes Fluid praktisch senkrecht zu dessen Strömungsrichtung einzutauchen ist,
- die durch eine Bohrung in einer Wand der Rohrleitung hindurch fluiddicht einzustecken ist und
- die umfaßt:
- ein kreiszylindrisches, einen vorgegebenen, der Bohrung angepaßten Außen-Durchmesser aufweisendes Gehäuse,
   -- dessen in das Fluid ragendes Frontende von einer als Kugelkalotte ausgebildeten Frontplatte aus Isolier-Material fluiddicht verschlossen ist,
      --- welche Kugelkalotte einen Radius hat, der etwa gleich dem 1,2-fachen bis 1,5-fachen Außen-Durchmesser des Gehäuses ist,
- eine im Gehäuse angeordnete Spulenanordnung zur Erzeugung eines durch die Frontplatte hindurch in das Fluid hinein reichenden Magnetfelds,
- einen mindestens teilweise aus einem weichmagnetischen Material bestehenden, im Gehäuse angeordneten Spulenkern,
   -- der an oder in der Nähe der Frontplatte endet, und
- eine erste galvanische und eine zweite galvanische Elektrode, die in der Frontplatte auf einem der Meridiane der Kugelkalotte symmetrisch zu einem Scheitelpunkt des Meridians angeordnet sind.

Durch die kugelkalotten-förmige Ausbildung der Frontplatte wird erreicht, daß die Strömung beginnt sich erst hinter dem Ort der Elektroden abzulösen sowie Wirbel zu bilden, und somit die Elektroden von Störungen, insb. diesen Wirbeln, noch unbeeinflußt bleiben. Somit ist die Meßgenauigkeit und die Linearität der Kennfunktion erheblich verbessert.

Die Erfindung wird nun anhand der Figuren der Zeichnung näher erläutert, in denen ein Ausführungsbeispiel dargestellt ist, wobei gleiche Teile mit denselben Bezugszeichen versehen sind.
- Fig. 1 zeigt: perspektivisch und teilweise geschnitten eine Darstellung des der Erfindung zugrunde liegenden Meßprinzips, und
- Fig. 2 zeigt: im Schnitt eine Strömungssonde nach der Erfindung.

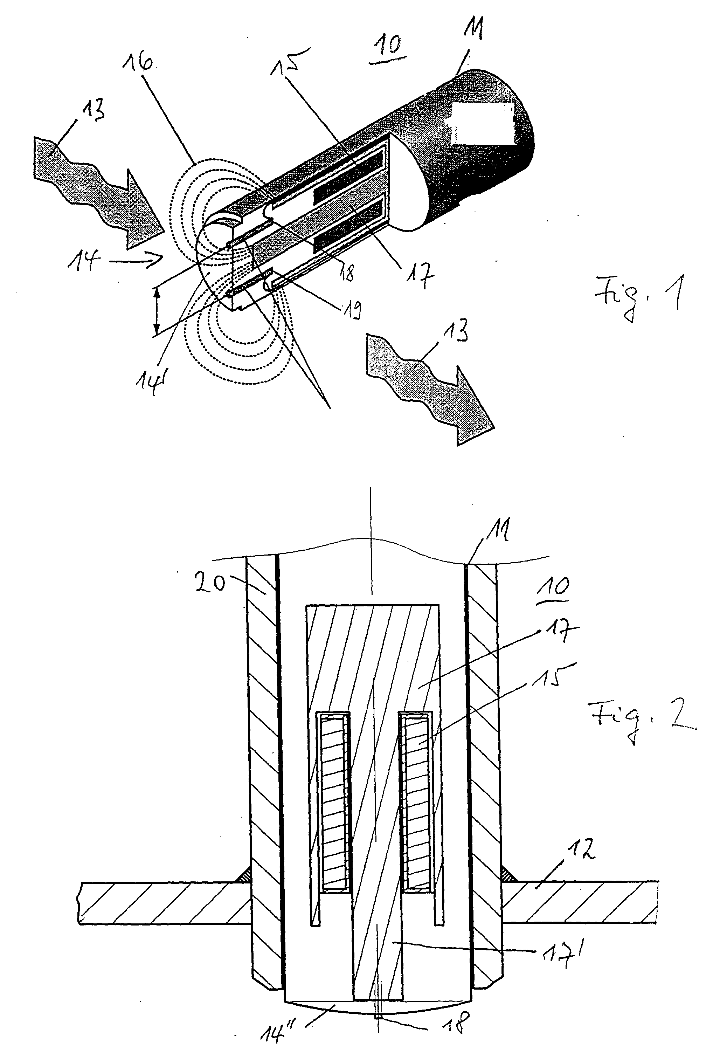

Anhand der perspektivischen und teilweise geschnittenen Darstellung der Fig. 1 wird zunächst das der Erfindung zugrunde liegende Meßprinzip erläutert.

Eine Strömungssonde 10 umfaßt ein im allgemeinen kreiszylindrisches, einen vorgegebenen Außen-Durchmesser aufweisendes Gehäuse 11. Dieser ist an den Durchmesser einer Bohrung angepaßt, die sich in einer Wand einer in Fig. 1 nicht, dagegen in Fig. 2 dargestellten Rohrleitung 12 befindet und in die die Strömungssonde fluiddicht eingesteckt ist. In der Rohrleitung 12 strömt ein zu messendes Fluid, in das die Strömungssonde praktisch senkrecht zur Strömungsrichtung des Fluids eintaucht, die durch die gewellten Pfeile 13 angedeutet ist.

Ein in das Fluid ragendes Frontende 14 des Gehäuses 11 ist von einer ebenen Frontplatte 14' aus Isolier-Material fluiddicht verschlossen. Mittels einer im Gehäuse angeordneten Spulenanordnung 15 läßt sich ein durch die Frontplatte 14' hindurch in das Fluid hinein reichendes Magnetfeld 16 erzeugen. Ein mindestens teilweise aus einem weichmagnetischen Material bestehender, im Gehäuse 11 angeordneter Spulenkern 17 endet an oder in der Nähe der Frontplatte 14'.

Eine erste galvanische und eine zweite galvanische Elektrode 18, 19 sind in der Frontplatte 14' angeordnet und berühren somit das Fluid. An den Elektroden 18, 19 läßt sich eine aufgrund des Faraday'schen Induktionsgesetzes induzierte elektrische Spannung abgreifen.

Im Ausführungsbeispiel der Fig. 2 ist die Strömungssonde im Schnitt dargestellt. Die Strömungssonde ist mittels eines Adapters 20, der in die Wand der Rohrleitung 12 eingesetzt und mit ihr z.B. verschweißt ist, in der Rohrleitung fluiddicht befestigt.

Dieser Aufbau ist besonders zweckmäßig, da zunächst der Adapter 20 in die Rohrleitung 12 eingesetzt und darin befestigt werden kann und erst danach die Strömungssonde 10 in den Adapter 20 eingesteckt und ihrerseits darin fixiert zu werden braucht.

Das in das Fluid ragende Frontende 14 des Gehäuses 11 ist entsprechend der Erfindung mit einer Frontplatte 14" aus Isolier-Material fluiddicht verschlossen, die als Kugelkalotte ausgebildet ist. Deren Radius ist etwa gleich dem 1,2-fachen bis 1,5-fachen Außen-Durchmesser des Gehäuses 11.

Die erste galvanische und die zweite galvanische Elektrode, von der in Fig. 2 nur die erste Elektrode 18 zu sehen ist, sind auf einem der Meridiane der Kugelkalotte symmetrisch zu einem Scheitelpunkt dieses Meridians angeordnet.

Wenn die Achse der Rohrleitung 12 praktisch senkrecht zur Ebene dieses Meridians verläuft, wie das für die Darstellung der Fig. 2 vorausgesetzt ist, strömt auch das Fluid praktisch senkrecht zu dieser Meridianebene. Da, wie oben bereits erläutert wurde, die Strömung sich erst hinter dem Ort der Elektroden ablöst und Wirbel bildet, ist die Strömung an den Elektroden störungsfrei.

## Patentansprüche

1. Magnetisch-induktive Strömungssonde (10),
- die in ein in einer Rohrleitung (12) strömendes und zu messendes Fluid praktisch senkrecht zu dessen Strömungsrichtung einzutauchen ist,
- die durch eine Bohrung in einer Wand der Rohrleitung (12) hindurch fluiddicht einzustecken ist und
- die umfaßt:
- ein kreiszylindrisches, einen vorgegebenen, der Bohrung angepaßten Außen-Durchmesser aufweisendes Gehäuse (11),
-- dessen in das Fluid ragendes Frontende (14) von einer als Kugelkalotte ausgebildeten Frontplatte (14") aus Isolier-Material fluiddicht verschlossen ist,
--- welche Kugelkalotte einen Radius hat, der etwa gleich dem 1,2-fachen bis 1,5-fachen Außen-Durchmesser des Gehäuses ist,
- eine im Gehäuse angeordnete Spulenanordnung (15) zur Erzeugung eines durch die Frontplatte (14") hindurch in das Fluid hinein reichenden Magnetfelds (16),
- einen mindestens teilweise aus einem weichmagnetischen Material bestehenden, im Gehäuse angeordneten Spulenkern (17'),
-- der an oder in der Nähe der Frontplatte (14") endet, und
- eine erste galvanische und eine zweite galvanische Elektrode (18, 19), die in der Frontplatte (14") auf einem der Meridiane der Kugelkalotte symmetrisch zu einem Scheitelpunkt des Meridians angeordnet sind.

## Claims

1. An electromagnetic flow probe (10)
- which is designed to be immersed in a fluid flowing in a pipe (12), which is to be measured, the direction of immersion being virtually perpendicular to the direction of fluid flow,
- which is designed to be passed through a hole in a wall of the pipe (12) fluid-tight, and
- which comprises:
- a circular cylindrical housing (11) having a predetermined outside diameter adapted to the bore,
-- the front end (14) of the housing, which extends into the fluid, being closed fluid-tight by a front plate (14") of insulating material in the form of a calotte,
--- which has a radius approximately equal to 1.2 to 1.5 times the outside diameter of the housing;
- a coil assembly (15) disposed in the housing for establishing a magnetic field (16) extending through the front plate (14") into the fluid;
- a coil core (17') disposed in the housing and made at least partially of soft magnetic material
-- which ends at or near the front plate (14"); and
- a first galvanic electrode (18) and a second galvanic electrode (19) which are disposed in the front plate (14") on one of the meridians of the calotte and symmetrically with respect to a vertex of the meridian.

## Revendications

1. Sonde d'écoulement magnéto-inductive (10),
- qui est destinée à être plongée dans un fluide à mesurer s'écoulant dans une conduite tubulaire (12), pratiquement perpendiculairement à sa direction d'écoulement,
- qui doit être emmanchée, étanche au fluide, à travers un perçage ménagé dans une paroi de la conduite tubulaire (12) et
- qui comprend :
- un boîtier (11) cylindrique à base circulaire qui présente un diamètre extérieur prédéterminé adapté au perçage,
-- dont l'extrémité frontale (14) qui est engagée dans le fluide est fermée étanche aux fluides par une plaque frontale (14") en matière isolante présentant la forme d'une calotte sphérique,
--- laquelle calotte sphérique possède un rayon qui est à peu près égal à 1,2 - 1, 5 fois le diamètre extérieur du boîtier,
- un dispositif de bobine (15) agencé dans le boîtier, destiné à la production d'un champ magnétique (16) qui se propage dans le fluide au travers de la plaque frontale (14"),
- un noyau de bobine (17') au moins partiellement composé d'une matière à magnétisme doux, disposé dans le boîtier,
-- qui se termine sur ou à proximité de la plaque frontale (14"), et
-- une première électrode galvanique et une deuxième électrode galvanique (18, 19) qui sont disposées dans la plaque frontale (14"), sur l'un des méridiens de la calotte sphérique, symétriquement par rapport à un point sommital du méridien.
